# EUROPEAN PATENT APPLICATION

(11) **EP 4 579 549 A1**
(43) Date of publication of application: **02.07.2025**
(21) Application number: 23220714.2
(22) Date of filing: 29.12.2023
(51) Int. Cl.: G06Q 10/087, G06T 19/00, G06V 20/20

(54) **COMPUTER IMPLEMENTED METHOD FOR GENERATING A TASK AND A SERVER FOR EXECUTING SUCH METHOD**

(71) Applicant: Auki Matterless Limited, Hong Kong (HK)
(72) Inventor: PIHL, Nils, Kowloon (HK); SHAW, Phil, Shek (HK); STEINBERGER, John, Geneva (CH)
(74) Representative: Zacco Sweden AB

(57) **Abstract**

The present invention relates to a computer implemented method for generating a task to be performed in a real space. The method comprising: obtaining i) a first image captured by a camera of a first mobile electronic device being calibrated in a virtual representation of the real space such that the first mobile electronic device has a known pose in the virtual representation of the real space and ii) an associated first pose of the first mobile electronic device at a moment of capturing the first image; inputting the first image to a machine learning model trained to output an action based on context in an image and a location in the image associated with the action, thereby obtaining i) an action to be performed and ii) a location within the first image associated with the action; for the action to be performed, determining a position of the action to be performed within the virtual representation of the real space as an intersection between a known structure of the virtual representation of the real space and a raycast from the first pose against a screen space coordinate of the location associated with the action to be performed in the first image; and generating a task to be performed, the task comprising the action to be performed and its position within the virtual representation of the real space.

## Description

### Technical field

The present invention relates to a computer implemented method for generating a task to be performed in a real space. The task is generated so that a human-readable description of the task paired with a coordinate position associated to the task in a real space are generated. The invention also relates to a server configured to execute at least a portion of the method steps for generating the task.

### Background

Arranging products in a store is a crucial aspect of retail management, and it involves the strategic placement of products to optimize sales, enhance the shopping experience, and streamline operations. This process is influenced by various factors, including consumer behavior, marketing strategies, and logistical considerations. Some key aspects of the problem of arranging products in a store are:
Consumer Behavior. Understanding how customers navigate through a store and how they make purchase decisions is essential. For example, placing essential or frequently purchased items in high-traffic areas can increase their visibility and sales.

Category Management. Products are often organized into categories to simplify the shopping experience for customers. This may involve grouping related items together, such as placing all breakfast cereals in one aisle. The layout should make it easy for customers to find what they are looking for, promoting convenience and efficiency.

Visual Merchandising. The visual appeal of product displays is crucial. Well-designed and attractive displays can capture the attention of shoppers, encouraging them to explore and purchase. Seasonal displays and thematic arrangements can create a sense of excitement and encourage sales during specific times of the year.

Inventory Management. Efficient store layouts help in managing inventory effectively. Placing products strategically based on their popularity and demand can reduce stockouts and overstock situations. Backroom organization and accessibility are also critical for restocking shelves quickly.

Promotional Strategies. Retailers often use end caps, promotional displays, and special sections to highlight featured products or promotions. These areas can be strategically placed to maximize visibility and encourage sales.

Space Utilization. Optimizing the use of available space is vital. Retailers must balance the desire for a wide product assortment with the need for clear aisles and an uncluttered shopping environment. Efficient use of space also contributes to a positive customer experience, reducing frustration and enhancing the overall shopping journey.

Cultural Considerations. Cultural factors may influence how products are arranged. For example, in some cultures, certain products may be grouped together due to dietary preferences or cultural traditions.

In summary, arranging products in a store is a multifaceted challenge that requires a deep understanding of consumer behavior, effective category management, visual merchandising skills, and consideration of various logistical and promotional factors. Successful retailers continuously analyze and adjust their store layouts to meet the evolving needs and preferences of their customers. Historically, RFID tags and smart shelving have been used to monitor product levels and automate reordering processes. Hence, implementing RFID tags and smart shelving may at least partly provide guidance in arranging products in a store by providing a system for monitoring product levels and automating reordering processes. However, other aspects, such as strategic placement of products to optimize sales and enhancing the shopping experience, of arranging products in a store cannot be solved by implementing RFID tags and smart shelving. Moreover, implementing RFID tags and smart shelving is costly due to the need of investment in RFID technology, including RFID tags, readers, and infrastructure.

Hence, there is a need in providing retailers with new technology for arranging products in the store.

### Summary of the invention

In view of the above, it is an object of the present invention to provide retailers with new technology for arranging products in the store. This new technology being easy to implement without the need of costly hardware installations.

According to a first aspect computer implemented method for generating a task to be performed in a real space is provided. The real space typically being a store. The method comprising: obtaining i) a first image captured by a camera of a first mobile electronic device being calibrated in a virtual representation of the real space such that the first mobile electronic device has a known pose in the virtual representation of the real space and ii) an associated first pose of the first mobile electronic device at a moment of capturing the first image; inputting the first image to a machine learning model trained to output an action based on context in an image and a location in the image associated with the action, thereby obtaining i) an action to be performed and ii) a location within the first image associated with the action; for the action to be performed, determining a position of the action to be performed within the virtual representation of the real space as an intersection between a known structure of the virtual representation of the real space and a raycast from the first pose against a screen space coordinate of the location associated with the action to be performed in the first image; and generating a task to be performed, the task comprising the action to be performed and its position within the virtual representation of the real space.

The present computer implemented method provides retailers with new technology for arranging products in the store. The method allows for computer vision to be performed by a mobile electronic device, with other words a roaming device, such as a phone or AR glasses. The method is easy to implement, less hardware dependent, and capable of placing the tasks in space - which makes the tasks more actionable. The task is generated so that a human-readable description of the task paired with a coordinate position associated to the task in a real space are generated. The present method offers contextually aware, spatially relevant suggestions and recommendations for how space can be used more efficiently to maximize sales.

The method may further comprise sending the task to a second mobile electronic device being calibrated in the virtual representation of the real space such that the second mobile device has a known pose in the virtual representation of the real space. The method may further comprise displaying the task at a display of the second mobile electronic device. The displaying may be made as an AR-object within the virtual representation of the real space, the AR-object being located at the position of the action to be performed.

The method may further comprise guiding a user of the second mobile electronic device to the position of the action to be performed.

The obtaining an action to be performed may comprise selecting the action to be performed from a set of candidate actions outputted from the machine learning model having the first image as input.

The selecting may comprise prompting a user to select the action to be performed from the set of candidate actions.

The virtual representation of the real space may be represented in a 3D space.

The virtual representation of the real space may be represented in a 2D space.

The virtual representation of the real space may be a virtual representation of a store. The virtual representation of the store may comprise a number of known structures for displaying products/articles in the store.

According to a second aspect a non-transitory computer-readable storage medium is provided. The non-transitory computer-readable storage medium having stored thereon instructions for implementing the method according to the first aspect, when executed on one or more devices having processing capabilities. The above mentioned features of the method, when applicable, apply to this second aspect as well. In order to avoid undue repetition, reference is made to the above.

According to a third aspect a server is provided. The server may be implemented as a cloud server. The server comprising circuitry configured to execute: an image obtaining function configured to obtain a first image and a first pose, of a first mobile electronic device at a moment the first mobile electronic device captured the first image, wherein the first mobile electronic device is calibrated in a virtual representation of a real space such that the first mobile electronic device has a known pose in the virtual representation of the real space; an action obtaining function configured to obtain i) an action to be performed and ii) a location within an image associated with the action to be performed by inputting the first image to a machine learning model trained to output an action based on context in an image and a location associated with the action in the image; a position determining function configured to, for the action to be performed, determine a position of the action to be performed within the virtual representation of the real space as an intersection between a known structure of the virtual representation of the real space and a raycast from the first pose against a screen space coordinate of the location associated with the action to be performed in the first image; and a task generating function configured to generate a task to be performed, the task comprising the action to be performed and its position within the virtual representation of the real space.

The server may further comprise a memory comprising information pertaining to the virtual representation of the space.

The above-mentioned features of the method, when applicable, apply to this third aspect as well. In order to avoid undue repetition, reference is made to the above.

A further scope of applicability will become apparent from the detailed description given below. However, it should be understood that the detailed description and specific examples are given by way of illustration only.

It is to be understood that the terminology used herein is for purpose of describing particular embodiments only, and is not intended to be limiting. It must be noted that, as used in the specification and the appended claim, the articles "a," "an," "the," and "said" are intended to mean that there are one or more of the elements unless the context clearly dictates otherwise. Thus, for example, reference to "a unit" or "the unit" may include several devices, and the like. Furthermore, the words "comprising", "including", "containing" and similar wordings does not exclude other elements or steps.

### Brief description of the drawings

The above and other aspects will now be described in more detail, with reference to appended figures. The figures should not be considered limiting; instead they are used for explaining and understanding.

As illustrated in the figures, the sizes of layers and regions may be exaggerated for illustrative purposes and, thus, are provided to illustrate the general structures. Like reference numerals refer to like elements throughout.
Fig. 1 illustrates a schematic top view of a real space in the form of a store.
Fig. 2 illustrates a virtual representation of the store in Fig. 1.
Fig. 3 illustrates a system of devices used to perform the method discussed in connection with Fig. 4.
Fig. 4 is a block diagram of a method for generating a task to be performed in the store of Fig. 1.
Fig. 5 illustrates a server, e.g. a cloud server, set to perform at least a portion of steps of the method of Fig. 4.

### Detailed description

The present invention will now be described more fully hereinafter with reference to the accompanying drawings, in which currently preferred embodiments of the invention are shown. This invention may, however, be embodied in many different forms.

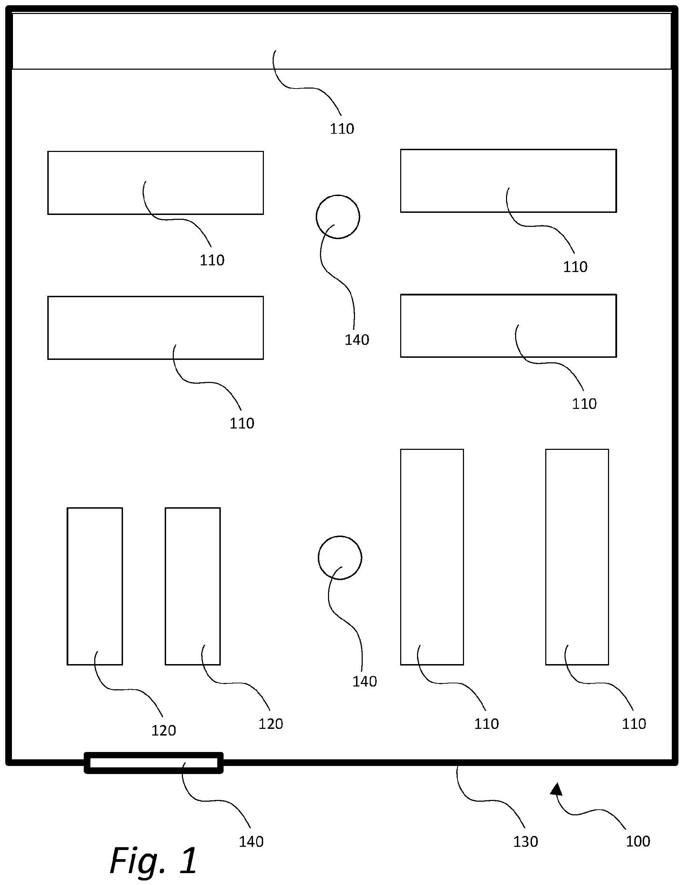

Fig. 1 illustrates a schematic top view of a real space in the form of a store 100. In the store 100 there is a number of structures 110 for exposing products/articles offered for sale in the store 100. Non-liming examples of structures 110 for exposing products/articles are gondola shelving, end cap displays, produce bins and tables for fresh fruits and vegetables, refrigerated display cases, stacked pallets, specialty displays, bulk bins, hanging displays, and floor stacking. Gondola shelving is one of the most common types of shelving in grocery stores. Gondola shelves are freestanding units that can be double-sided or single-sided, allowing for flexibility in aisle layout. They are adjustable and versatile for displaying a wide range of products. End cap displays are shelves at the end of aisles. These spaces are often used for promotional displays, featuring new products, or showcasing items on sale. End cap displays attract attention and encourage impulse purchases. Produce bins and tables for fresh fruits and vegetables allow customers to easily view and select items. This creates a market-like atmosphere and enhances the visibility of the produce. Refrigerated display cases are used to display perishable items such as dairy products, meat, and deli items. These cases can be open or enclosed and are designed to maintain the freshness of temperature-sensitive products. Stacked Pallets of goods, especially non-perishable items or promotional products, may be stacked in strategic locations throughout the store. This technique is common for bulk or seasonal items. Specialty displays may be created for certain products, such as seasonal items, ethnic foods, or specialty ingredients. These displays are often themed and designed to attract customers interested in specific categories. Aisle shelving units along the aisles are used to organize a variety of products. Bulk bins are commonly used for items like grains, nuts, and candies. Customers can use scoops to select the desired quantity, and this approach is often more cost-effective for both the store and the customer. Hanging displays, such as clip strips or hanging racks, are often used for small or impulse-buy items like snacks, candies, or travel-sized products. Floor stacking may be used to stack certain products directly on the floor to create eye-catching displays. This is often done with promotional or bulk items. These structures are often used in combination to create an engaging and organized shopping environment. The goal is to optimize product visibility, accessibility, and appeal to enhance the overall shopping experience for customers.

In addition to structures 110 for exposing goods the store 100 may comprise other structures, such as check-out counters 120, walls 130, doors 140, and/or supporting pillars 150.

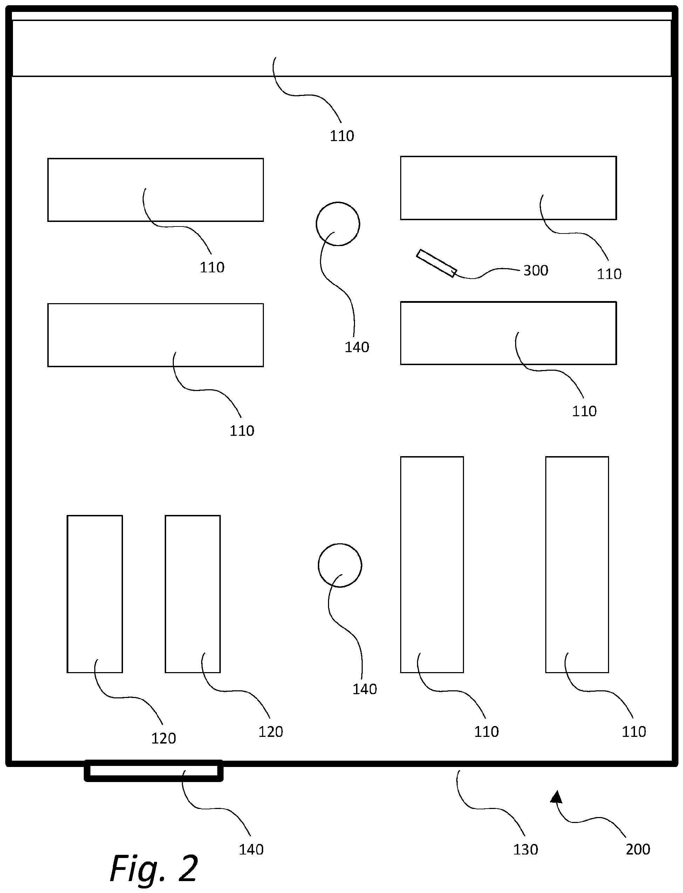

In Fig. 2 a virtual representation 200 of the store 100, i.e. a virtual representation 200 of a real space wherein the real space is the store, is illustrated. The different structures 110, 120, 130, 140, 150 of the store 100 are included in the virtual representation 200. The virtual representation 200 may be a 2D or 3D representation of the real world. Typically, the virtual representation 200 is a 3D representation. In order to simplify the drawings, in the in Fig. 2 illustrated example, the virtual representation 200 is a 2D representation of the real world. Within the virtual representation 200 of the store 100 a virtual representation of a first mobile electronic device 300 is also illustrated. The first mobile electronic device 300 may, e.g., be a mobile phone, a robot, a body worn camera, smart glasses, augmented reality (AR) glasses, or any other suitable mobile electronic device having the possibility to capture images within the store 100. The first mobile electronic device 300 is calibrated in the virtual representation of the store such that a current pose of the first mobile electronic device 300 in the virtual representation of the real space is known. In this context a current pose has the meaning of a current position and orientation within the virtual representation 200 of the real space.

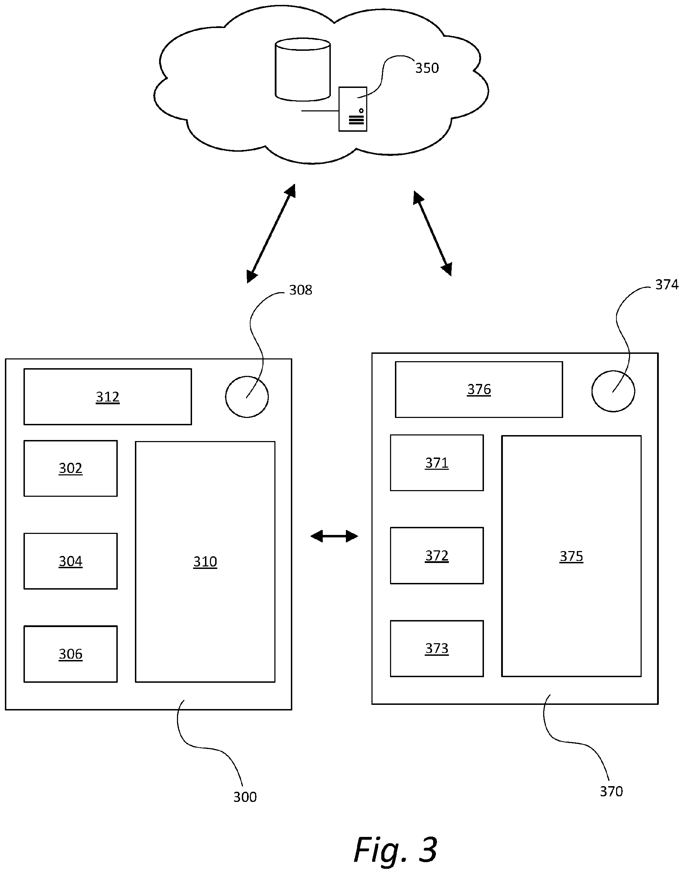

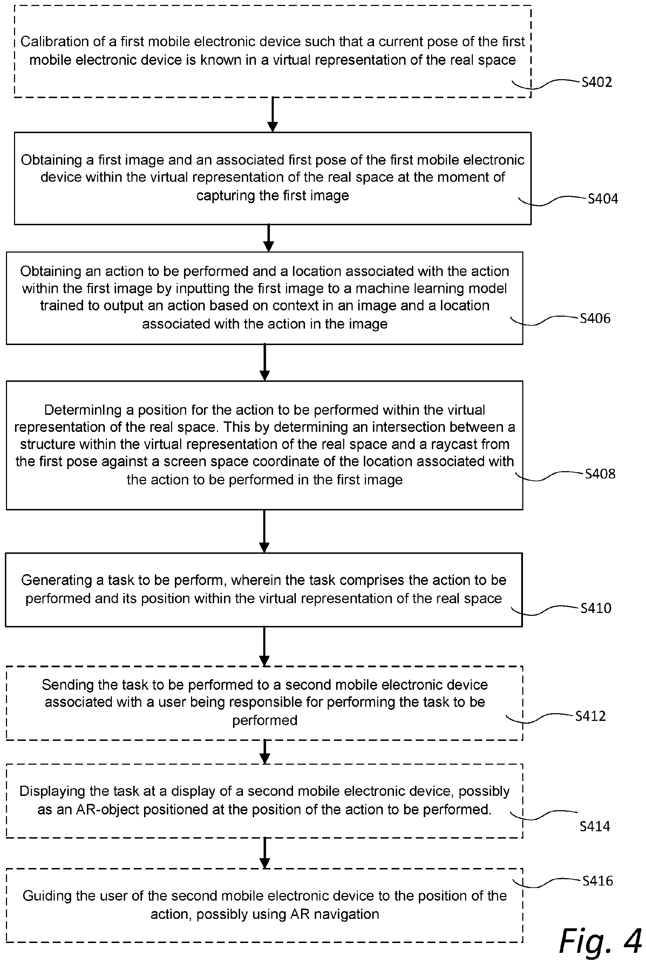

The first mobile electronic device 300 is schematically illustrated in Fig. 3 together with other devices used for implementation the method for generating a task to be performed in the real space, i.e. the store, according to the present invention. The method will be further discussed below in connection with Fig. 4. The first mobile electronic device 300 is configured to capture images of the real space. The images are captured using a camera 308 of the first mobile electronic device 300. Camera intrinsics of the first mobile electronic device 300 are known. Further, the first mobile electronic device 300 is configured to, upon capturing an image, associate its current pose, i.e. orientation and position, in the virtual representation 200 of the real space with the captured image. This may be implemented by that the first mobile electronic device 300 is monitoring its movement using one or more built-in sensors such as an accelerometer 302, a gyroscope 304 and/or a magnetometer 306. The accelerometer 302 is configured to provide information about the movement of the first mobile electronic device 300, including changes in speed and direction. Acceleration data is typically represented in three axes: X, Y, and Z, corresponding to the 3D space in which the first mobile electronic device 300 is moving. The gyroscope 304 is configured to measure orientation and rotational movements of the first mobile electronic device 300. The gyroscope provides information about tilt and rotation rates around the X, Y, and Z axes. The magnetometer is configured to determine orientation of the first mobile electronic device 300 relative to the Earth's magnetic field. The magnetometer helps in providing a sense of direction of the first mobile electronic device 300. By combining data from the accelerometer, the gyroscope and/ or the magnetometer (and possibly also other sensors), the first mobile electronic device 300 can accurately track its movement in the 3D space.

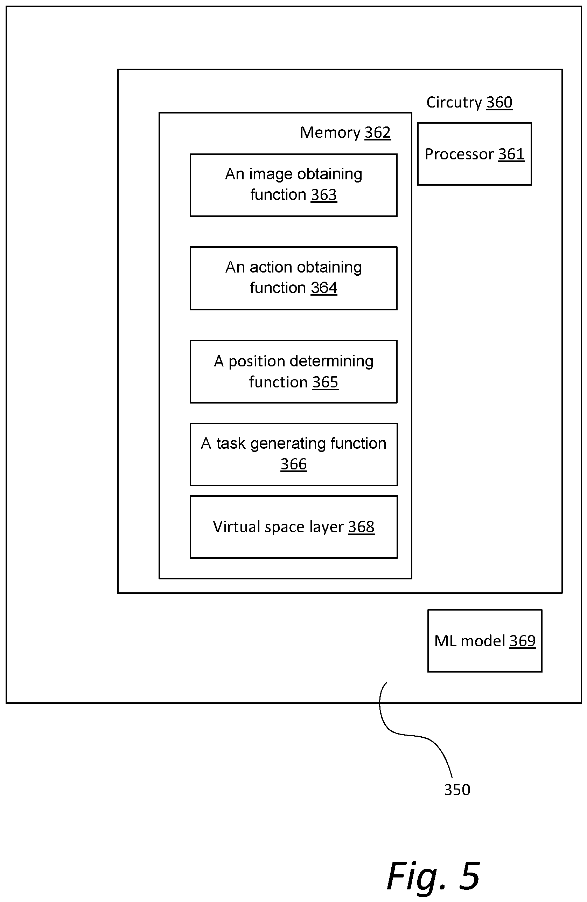

The virtual representation 200 of the real space may be comprised in a virtual space layer 368. The virtual space layer 368 may be hosted at a server 350, e.g. a cloud server, see Fig. 5. The virtual space layer 368 is a place where information about the virtual representation 200 of the real world is stored. The virtual space layer 368 comprises information about the structures 110, 120, 130, 140, 150 being present in the real world, in this case in the store 100. The virtual space layer 368 may further comprise information pertaining to a current pose of the first mobile electronic device 300 in the virtual representation 200. The virtual space layer 368 may further comprise information pertaining to one or more historical poses of the first mobile electronic device 300, preferably associated with a time instance of the historical pose. The virtual space layer 368 may further comprise information pertaining to virtual objects, such virtual objects will be discussed in more detail below. Hence, the virtual space layer 368 may represent a partly virtual world, such as an augmented reality world.

The first mobile electronic device 300 may be configured to share its current pose with the virtual space layer 368. Hence, the first mobile electronic device 300 is configured to communicate with the server 350. This may be achieved by connecting the first mobile electronic device 300 to a digital network 340, such as a mobile network (e.g. 3G, 4G, 5G, or the like) or a WiFi network. The server 350 also being connected to the digital network 340. Hence, a current pose, i.e. position and orientation, of the first electronic device 300 in virtual representation 200 of the real space may be obtained by accessing the virtual space layer 368 contained in the server 350, the virtual space layer 368 comprising information pertaining to position and orientation of the first mobile electronic device 300.

A computer implemented method 400 for generating a task to be performed in a real space will now be described with reference to Fig. 4. The real space is typically the store 100 illustrated and discussed above in connection with Figs 1 and 2. Fig. 4 is a flow chart illustrating the steps of the method 400. Below, the different steps are described in more detail. Even though illustrated in a specific order, the steps of method 400 may be performed in any suitable order, in parallel, as well as multiple times.

A calibration S402 of the first mobile electronic device 300 is performed such that a current pose of the first mobile electronic device 300 is known in the virtual representation 200 of the real space. For example, a current pose of the first mobile electronic device 300 is updated and known in the virtual space layer 368 being hosted at the server 350.

While the first mobile electronic device 300 is moved within the real space one or more images may be captured by the camera 308 of the first mobile electronic device 300. The first mobile electronic device 300 may be associated with a user, e.g. a store manager, being responsible for the real space, i.e. the store 100. The store manager may be making rounds in the store and the first mobile electronic device 300 may capture one or more images in the store during such round. Capturing of an image may be triggered by the user of the first mobile device 300. Alternatively, or in combination, an image may be captured automatically (e.g. one image every second). Yet alternatively, the image may be an image of a video sequence captured by the first mobile electronic device 300. Further, an associated pose of the first mobile electronic device 300 within the virtual representation 200 at a moment of capturing the respective image is saved. The respective image and the pose of the first mobile electronic device 300 within the virtual representation 200 at the moment of capturing the respective image are associated with each other. For example, a first image is captured by the camera 308 of the first mobile electronic device 300, and an associated first pose of the first mobile electronic device 300 within the virtual representation 200 of the real space at a moment of capturing the first image is saved. The first pose and the first image are associated with each other. Hence, a first image and an associated first pose of the first mobile electronic device 300 within the virtual representation 200 of the real space at the moment of capturing the first image are obtained S404.

The first image is inputted to a machine learning model trained to output an action based on context in an image and a location associated with the action in the image. Thereby an action to be performed and a location associated with the action within the first image are obtained S406. Example of actions the machine learning model is trained to output are: The top shelf in the snack aisle is messy, please tidy up; The campaign for brand X is not compliant with the agreement with them, please rearrange so that we meet the agreement (link to agreement can be included); Please, restock/refill a specific product/article at shelf X in a specific aisle; Please rearrange shelf Y in a specific aisle; Shelf is damaged, please repair; Price tag / Electronic Shelf Label is missing, please replace. The location associated with the action is typically an X, Y coordinate within the image where the action is to be performed. The machine learning model may be implemented in the server 350. Alternatively, the machine learning model may be machine learning model available as a cloud service accessible by the server 350 and/or the first mobile electronic device 300. Some examples of machine learning models that may be used are: YOLOv5, Nvidia Retail Object Recognition, Walmart Product Recognition Challenge, Osprey, LLaVa, and ChatGPT (GPT4).

The obtaining S406 an action to be performed may comprise selecting the action to be performed from a set of candidate actions outputted from the machine learning model having the first image as input. That is, the machine learning model may output a plurality of candidate actions from a single input image. Alternatively, or in combination, the obtaining S406 an action to be performed may comprise selecting the action to be performed from a set of candidate actions outputted from the machine learning model having the plurality of images as input. That is, the machine learning model may output a plurality of candidate actions from a plurality of input images. The selecting of an action to be performed may comprise prompting a user to select the action to be performed from the set of candidate actions. The prompting for the selection of the action to be performed may be made at a display 310 on the first mobile electronic device 300. Alternatively, the prompting for the selection of the action to be performed may be made at another device, if so the machine learning model is typically configured to communicate with this another device for prompting such selection.

A position within the virtual representation of the real space of the action to be performed is determined S408. This by determining an intersection between a structure within the virtual representation of the real space and a raycast from the first pose against a screen space coordinate of the location associated with the action to be performed in the first image. The screen space coordinate being connected to the location associated with the action in the image. Raycasting is a technique used in computer graphics and computer vision to simulate the behavior of rays of light as they interact with objects in a virtual environment, e.g. the representation of the real space used in this method. Raycasting is commonly employed in rendering, collision detection, and other applications. Imagine you have a virtual camera or eye in a 3D space, and you want to determine what objects are visible from that viewpoint. Raycasting involves casting rays from the eye or camera into the scene to check for intersections with objects. The process starts with defining a ray, which is essentially a straight line with an origin (starting point) and a direction. The origin is usually the camera or eye position. The ray is cast into the scene, and its path is traced until it intersects with a structure in the representation of the real space. When a ray is cast, the algorithm checks for intersections with structures in the space. In other words, if the pose of the camera capturing the image is known (as in this case), and the camera intrinsics are known (as in this case), then it is possible to raycast against a pixel in the photo taken from the camera. Upon the machine learning model highlights the top right corner of the photo, then the raycast is to be performed by shooting a ray from the pose of the camera towards the direction of the space captured in the top right of the image. That ray will then, in the present method, at some point intersect with the known structures of the space. As such, a measure of how far away from the camera the selected raycast pixel is in reality.

A task to be performed is generated S410. The task comprises the action to be performed and its position within the virtual representation of the real space.

The task to be performed may be sent S412 to a second mobile electronic device 370. The second mobile electronic device 370 may be associated with a user being responsible for performing the task to be performed. The second mobile electronic device is also calibrated in the virtual representation 200 of the real space, i.e. the store 100. Hence, a current pose of the second mobile electronic device in the virtual representation 200 of the real space is known. In view of the discussion above, it is to be noted that in this context a current pose has the meaning of a current position and orientation within the virtual representation 200 of the real space. Again, in view of the discussion above, it is noted that the virtual representation 200 of the real space, i.e. the store 100, may be comprised in a virtual space layer 368. Such virtual space layer 368 being hosted as the server 350. The second mobile electronic device 370 is configured to share with the virtual space layer 368 information pertaining to its current pose. This by monitoring its movement using one or more built-in sensors such as a accelerometer 371, a gyroscope 372 and/or a magnetometer 373. It is to be noted that in some embodiments the first mobile electronic device 300 and the second mobile electronic device 370 may be the same mobile electronic device. But in other embodiments, as in the embodiment disclosed in connection with Fig.3 the first mobile electronic device 300 and the second mobile electronic device 370 may be the different mobile electronic devices.

The task may be displayed S414 at a display 375 of the second mobile electronic device 370. Such displaying of the task may be made as an AR-object positioned within the virtual representation 200 of the real space. The AR-object being located at the position of the action within the virtual representation 200 of the real space.

Guiding S416 of the user of the second mobile electronic device to the position of the action within the virtual representation of the real space may also be performed. Such guiding may be made using AR navigation. That is, AR objects, e.g. in the form of directional arrows, may be displayed on the display of the second mobile electronic device. The directional arrows may be updated during movement of the second mobile electronic device such that a user is guided to the position of the action. Upon arriving at the position of the action the action may be displayed as an VR-object on the display of the second mobile electronic device at a location corresponding to the position of the action. The VR-object may comprise instructions associated with the action to be performed.

The method 400 may of course be iterated so that a plurality of tasks to be performed are generated. Each such task may then be sent to a mobile electronic device for execution by displaying the task and guiding the user of the mobile electronic device to the respective task. Different tasks may be sent to different mobile electronic devices. More than one task may be sent to the same mobile electronic device.

With reference to Fig. 5 the server 350 will be discussed in more detail. The server 350 may be implemented as a separate device. Alternatively, the server 350 may be implemented as a distributed server, such as a cloud server. The server 350 comprises circuitry 360. The circuitry 360 is configured to carry out overall control of functions and operations of the server 350. The circuitry 360 may include one or more processors 361. Each such processor may be any kind of processor configured to execute program code stored in one or more memories 362, in order to carry out functions and operations of the server 350. Each such memory 362 may be one or more of a buffer, a flash memory, a hard drive, a removable medium, a volatile memory, a non-volatile memory, a random access memory, RAM, or another suitable memory unit. In a typical arrangement, the server 350 may include both non-volatile memories for long term data storage and volatile memories that functions as system memory for the circuitry 360.

The memory 362 of the server 350 may comprise information pertaining to the virtual representation 200 of the space. This in the form of the virtual space layer 368 discussed above.

Functions and operations of the server 350 may be embodied in the form of executable logic routines (e.g., lines of code, software programs, etc.) that are stored on a non-transitory computer readable medium (e.g., the memory 362) of the server 350 and are executed by the circuitry 360. Furthermore, the functions and operations of the server 350 may be a stand-alone software application or form a part of a software application that carries out additional tasks related to the server 350. The described functions and operations may be considered a method that the corresponding part of the server is configured to carry out. Also, while the described functions and operations may be implemented in software, such functionality may as well be carried out via dedicated hardware or firmware, or some combination of hardware, firmware and/or software.

The circuitry 360 is configured to execute an image obtaining function 363. The image obtaining function 363 is configured to obtain a first image and a first pose in the virtual representation of the real space of the first mobile device 300 at a moment the first mobile device captured the first image. As discussed above, the first mobile device 300 is calibrated in the virtual representation 200 of the real space such that the first mobile electronic device 300 has a known pose in the virtual representation 200 of the real space. Details on how to obtain such a first image and a pose of the first mobile electronic device 300 upon capturing the first image is discussed in more detail above, in order to avoid undue repetition reference is made to this discussion above.

The circuitry 360 is further configured to execute an action obtaining function 364. The action obtaining function 364 is configured to obtain an action to be performed and a location within an image associated with the action. This by inputting the first image to a machine learning model 369 trained to output an action based on context in an image and a location associated with the action in the image. The machine learning model 369 may be implemented on the server 350. Details on how to obtain such an action to be performed and a location within the first image associated with the action is discussed in more detail above, in order to avoid undue repetition reference is made to this discussion above.

The circuitry 360 is further configured to execute a position determining function 365. The position determining function 365 is configured to, for the action to be performed, determine a position of the action to be performed within the virtual representation 200 of the real space as an intersection between a known structure of the virtual representation 200 of the real space and a raycast from the first pose against a screen space coordinate of the location associated with the action to be performed in the first image. Details on how to determine such a position of the action to be performed within the virtual representation 200 of the real space is discussed in more detail above, in order to avoid undue repetition reference is made to this discussion above.

The circuitry 360 is further configured to execute a task generating function 366. The task generating function 366 is configured to generate a task to be performed, the task comprising the action to be performed and its position within the virtual representation 200 of the real space. Details on how to generate such a task is discussed in more detail above, in order to avoid undue repetition reference is made to this discussion above.

The person skilled in the art realizes that the present invention by no means is limited to what is explicitly described above. On the contrary, many modifications and variations are possible within the scope of the appended claims.

For example, some of the functions discussed above to be executed by the server 350 may in some embodiment be executed at another device having processing capabilities. One or more of these functions may be executed on the first mobile computing device 300 using circuitry 312 of the first mobile computing device 300. One or more of these functions may be executed on the second mobile computing device 370 using circuitry 376 of the second mobile computing device 300. As one example, the position determining function 365 may be executed on a mobile computing device, e.g. the first mobile computing device 300 or the second mobile computing device 370, if the virtual representation 200 of the real space is shared with the mobile computing device.

Further, the machine learning model may additionally also output a portion of the image associated with the action. This in order to add a highlighted portion of the real space to the task.

Although the computer implemented method for generating a task to be performed in a real space above has been discussed in the context of to be used in a store for organizing the store, the method may be used in other contexts as well. The method can be used for any physical space that has context-specific tasks. For example, the method may be used for cleaning and organizing a house for living, cleaning and organizing a mall or office space, building inspection, and/or facilities management.

Additionally, variations can be understood and effected by the skilled person in practicing the claimed invention, from a study of the drawings, the disclosure, and the appended claims.

## Claims

1. A computer implemented method for generating a task to be performed in a real space, the method comprising:
obtaining (S404) i) a first image captured by a camera (308) of a first mobile electronic device (300) being calibrated in a virtual representation (200) of the real space such that the first mobile electronic device (300) has a known pose in the virtual representation (200) of the real space and ii) an associated first pose of the first mobile electronic device (300) at a moment of capturing the first image;
inputting the first image to a machine learning model (369) trained to output an action based on context in an image and a location in the image associated with the action, thereby obtaining (S406) i) an action to be performed and ii) a location within the first image associated with the action;
for the action to be performed, determining (S408) a position of the action to be performed within the virtual representation of the real space as an intersection between a known structure of the virtual representation (200) of the real space and a raycast from the first pose against a screen space coordinate of the location associated with the action to be performed in the first image; and
generating (S410) a task to be performed, the task comprising the action to be performed and its position within the virtual representation (200) of the real space.

2. The method according to claim 1, further comprising sending (S412) the task to a second mobile electronic device (370) being calibrated in the virtual representation (200) of the real space such that the second mobile device (370) has a known pose in the virtual representation (200) of the real space, and displaying (S414) the task at a display (375) of the second mobile electronic device (370) as an AR-object within the virtual representation (200) of the real space, the AR-object being located at the position of the action to be performed.

3. The method according to claim 2, further comprising guiding (S416) a user of the second mobile electronic device (370) to the position of the action to be performed.

4. The method according to any one of claims 1-3, wherein obtaining (S406) an action to be performed comprises selecting the action to be performed from a set of candidate actions outputted from the machine learning model (369) having the first image as input.

5. The method according to claim 4, wherein in the selecting comprises prompting a user to select the action to be performed from the set of candidate actions.

6. The method according to any one of claims 1-5, wherein the virtual representation (200) of the real space is represented in a 3D space.

7. The method according to any one of claims 1-5, wherein the virtual representation (200) of the real space is represented in a 2D space.

8. The method according to any one of claims 1-7, wherein the virtual representation (200) of the real space is a virtual representation (200) of a store (100), the virtual representation (200) of the store (100) comprising a number of known structures (110) for displaying products/articles in the store (100).

9. A non-transitory computer-readable storage medium having stored thereon instructions for implementing the method according to any one of claims 1-8, when executed on one or more devices having processing capabilities.

10. A server (350) comprising circuitry (360) configured to execute:
an image obtaining function (363) configured to obtain a first image and a first pose, of a first mobile electronic device (300) at a moment the first mobile electronic device (300) captured the first image, wherein the first mobile electronic device (300) is calibrated in a virtual representation (200) of a real space such that the first mobile electronic device (300) has a known pose in the virtual representation (200) of the real space;
an action obtaining function (364) configured to obtain i) an action to be performed and ii) a location within an image associated with the action to be performed by inputting the first image to a machine learning model (369) trained to output an action based on context in an image and a location associated with the action in the image;
a position determining function (365) configured to, for the action to be performed, determine a position of the action to be performed within the virtual representation (200) of the real space as an intersection between a known structure (110) of the virtual representation (200) of the real space and a raycast from the first pose against a screen space coordinate of the location associated with the action to be performed in the first image; and
a task generating function (366) configured to generate a task to be performed, the task comprising the action to be performed and its position within the virtual representation (200) of the real space.

11. The server according to claim 10, wherein the server (350) is implemented as a cloud server.

12. The server according to claim 10 or 11, further comprising a memory (362) comprising information pertaining to the virtual representation (200) of the space.
